# EUROPÄISCHE PATENTSCHRIFT

(11) **EP 3 611 747 B1**
(45) Veröffentlichungstag und Bekanntmachung des Hinweises auf die Patenterteilung: **10.08.2022**
(21) Anmeldenummer: 18189372.8
(22) Anmeldetag: 16.08.2018
(51) Int. Cl.: H01H 50/02, H01H 9/02

(54) **SPANNUNGSBEGRENZUNGSEINRICHTUNG**
VOLTAGE LIMITING CIRCUIT
DISPOSITIF DE LIMITATION DE TENSION

(43) Veröffentlichungstag der Anmeldung: 19.02.2020
(73) Patentinhaber: Rail Power Systems GmbH, 81373 München (DE)
(72) Erfinder: Beuchelt, Julian, 65817 Eppstein (DE)
(74) Vertreter: Oppermann, Frank

(56) Entgegenhaltungen:
- EP-A1- 3 287 312
- CN-A- 101 707 358
- DE-A1-102013 200 254
- DE-A1-102015 200 186

## Beschreibung

Die Erfindung betrifft einen Schaltschrank mit einer Spannungsbegrenzungseinrichtung, die ein elektromagnetisch betätigbares Schaltgerät aufweist, mit dem eine elektrische Verbindung zwischen einem ersten Kabelanschluss und einem zweiten Kabelanschluss herstellbar ist.

Im Bereich der Bahnenergieversorgung, insbesondere im Bereich von mit Gleichstrom betriebenen Bahnen, finden Spannungsbegrenzungseinrichtungen (VLD = Voltage Limiting Device) Anwendung. Bei gleichstrombetriebenen Bahnen wird die Fahrschiene in aller Regel als Rückleiter für den Fahrstrom benutzt. Dabei ist die Fahrschiene gegen das Erdreich isoliert, um das Auftreten von Streuströmen zu verhindern. Der durch die Fahrschiene fließende Rückstrom führt aufgrund des elektrischen Widerstands der Schiene zu einer Potentialdifferenz gegenüber der Erde, die als eine Spannung zwischen Schiene und Erde abgegriffen werden kann. Zur Vermeidung unzulässiger Berührungsspannungen, die im Betrieb oder Fehlerfall auftreten können, sind Schutzmaßnahmen vorgeschrieben, die sehr oft in Form von Spannungsbegrenzungseinrichtungen ausgeführt werden. Dabei sind Spannungsbegrenzungseinrichtungen in der Unterform von selbständig rückstellbaren Erdungskurzschließern betrieblich vorteilhaft. Diese werden im Allgemeinen zwischen der Fahrschiene und der Erdungsanlage eingebaut und sprechen bei einem definierten Schwellwert für die Berührungsspannung an.

Die bekannten Spannungsbegrenzungseinrichtungen verfügen über ein Schaltgerät, das eine elektrische Verbindung zwischen zwei Kabelanschlüssen herstellt. Die Schaltgeräte weisen einen einpoligen oder mehrpoligen Schaltschütz auf, der einen feststehenden und einen beweglichen Schaltkontakt hat, der von einer elektromagnetischen Betätigungseinheit betätigt wird. Der Schaltschütz kann zusammen mit Thyristoren betrieben werden, die in einem beliebigen zeitlichen Verhältnis mit dem Schaltschütz angesteuert werden. Nachdem die Thyristoren gezündet haben, kann der Schütz die Last übernehmen. Zur Ansteuerung des Schaltschützes bzw. der Thyristoren sind mindestens ein Steuergerät und/oder Steuerelektronik vorgesehen. Häufig befinden sich die Komponenten in einem Schaltschrank.

Die Druckschrift CN 101 707 358 A offenbart einen Schaltschrank mit einer Spannungsbegrenzungseinrichtung, der dem Oberbegriff des Anspruchs 1 entspricht.

Für eine normkonforme Ausführung muss der Schaltschütz den Strom in einer gewissen Stärke für eine gewisse Zeit führen können. Wenn die Stromstärke zu groß wird, müssen technische Maßnahmen ergriffen werden, um die Schaltkontakte des Schützes zu verstärken oder zu entlasten.

Der Erfindung liegt die Aufgabe zugrunde, eine Spannungsbegrenzungseinrichtung zu schaffen, die höhere Schaltleistungen bei gleichbleibenden Abmessungen ermöglicht.

Die Lösung dieser Aufgabe erfolgt erfindungsgemäß mit den Merkmalen des Patentanspruchs 1. Die Gegenstände der abhängigen Ansprüche betreffen vorteilhafte Ausführungsformen der Erfindung.

Die erfindungsgemäße Spannungsbegrenzungseinrichtung verfügt über ein elektromagnetisch betätigbares Schaltgerät, mit dem eine elektrische Verbindung zwischen einem ersten Kabelanschluss und einem zweiten Kabelanschluss herstellbar ist, wobei ein elektrischer Leiter den ersten Kabelanschluss mit dem einen Anschluss des Schaltgeräts und ein anderer elektrischer Leiter den zweiten Kabelanschluss mit dem zweiten Anschluss des Schaltgeräts elektrisch verbindet. Die beiden elektrischen Leiter können jeweils mehrere leitende Teile aufweisen. Die Spannungsbegrenzungseinrichtung zeichnet sich dadurch aus, dass einer der beiden elektrischen Leiter eine elektrisch leitende Trägerplatte umfasst, die gleichsam als Montageplatte für zumindest von Teilen des anderen elektrischen Leiters dienen kann. Die Kabelanschlüsse können jeweils einen oder mehrere Kabelschuhe oder dergleichen aufweisen, um an einen Kabelanschluss ein Kabel bzw. mehrere Kabel anschließen zu können.

In diesem Zusammenhang wird unter einer elektrisch leitenden Trägerplatte ein flächiges Bauteil verstanden, das sich von einem Bauteil unterscheidet, das in Bezug auf die Länge eine nur verhältnismäßig geringe Breite hat, d. h. von einem schmalen Bauteil, beispielsweise ein schienenförmiger Leiter. Die Ausdehnung der Trägerplatte in Richtung der Breite erlaubt im Gegensatz zu einem elektrischen Leiter, der sich durch eine im Verhältnis zur Länge nur geringe Breite auszeichnet, eine Stromverdrängung in Breitenrichtung. Da der Stromleiter in die Breite gezogen ist, kann eine Stromverdrängung in eine andere Richtung als in die Richtung des Schaltgeräts, vorzugsweise in die entgegengesetzte Richtung erfolgen. Es hat sich gezeigt, dass dadurch die auf die leitenden Teile des Schaltgeräts, insbesondere dessen Schaltkontakte, wirkenden Kräfte verringert und die Schaltkontakte entlastet werden. Dadurch werden die elektrischen Eigenschaften der Spannungsbegrenzungseinrichtung verbessert. Die Spannungsbegrenzungseinrichtung kann höhere Lasten schalten, ohne dass die Kontakte des Schaltgeräts verstärkt werden müssten.

Die Trägerplatte verbessert als elektrischer Leiter nicht nur die elektrischen Eigenschaften der Spannungsbegrenzungseinrichtung, sondern vereinfacht auch die Anordnung und Befestigung der einzelnen Komponenten der Spannungsbegrenzungseinrichtung.

Bei der erfindungsgemäßen Spannungsbegrenzungseinrichtung kann die Trägerplatte gleichsam der Montage zumindest von Teilen des elektrischen Leiter dienen, der nicht die Trägerplatte umfasst, wobei dieser elektrische Leiter einfach mittels eines Isolators an der elektrisch leitenden Trägerplatte befestigt werden kann oder zumindest Teile dieses Leiters mittels Isolatoren an der elektrisch leitenden Trägerplatte befestigt werden können. Dadurch ist bei den gegebenen Platzverhältnissen im Schaltschrank eine enge räumliche Anordnung der einzelnen Komponenten möglich, so dass ein kompakter Aufbau der Spannungsbegrenzungseinrichtung erzielt werden kann.

Die Spannungsbegrenzungseinrichtung ist in einem Schaltschrank angeordnet, der eine Vorderseite und eine Rückseite, ein linkes Seitenteil und rechtes Seitenteil und ein Deckelteil und ein Bodenteil aufweist. In dem Schaltschrank ist die elektrisch leitende Trägerplatte an dessen Rückseite angeordnet, so dass sich einzelne Komponenten der Spannungsbegrenzungseinrichtung vor der Trägerplatte anordnen und an der Trägerplatte befestigen lassen. Die Trägerplatte bildet zumindest einen Teil der Rückwand des Schaltschranks.

Vorzugsweise ist die Trägerplatte die Rückwand des Schaltschranks. Sie kann aber auch zumindest einen Teil einer rückwärtigen Wand des Schaltschranks bilden, die nicht die Rückwand des Schaltschranks ist. In diesem Fall kann hinter der Trägerplatte noch eine Verkleidung oder dergleichen vorgesehen sein, die den hinteren Teil des Schaltschranks bildet. Die Trägerplatte kann aber auch im Bereich einer der beiden Seitenteile des Schrankes angeordnet sein. Hierbei kann die Trägerplatte auch zumindest ein Teil des Seitenteils sein.

Die Trägerplatte besteht aus einem elektrisch leitenden Material, das Kupfer oder Aluminium sein kann. In der Praxis ist das kostengünstigere Aluminium ausreichend.

Der die elektrisch leitende Trägerplatte nicht umfassende Leiter weist vorzugsweise eine Sammelschiene auf, um eine elektrische Verbindung zwischen Kabelanschluss und Schaltgerät herzustellen. Dieser Strompfad kann aber auch noch weitere leitende Teile umfassen.

Eine bevorzugte Ausführungsform sieht vor, dass die Sammelschiene des die elektrisch leitende Trägerplatte nicht umfassenden Leiters und die elektrisch leitende Trägerplatte in dem Schaltschrank in unterschiedlichen Ebenen, d. h. in Abhängigkeit von der Blicksichtung hintereinander bzw. übereinander, angeordnet sind. Die Trägerplatte ist vorzugsweise in einem hinteren Bereich des Schaltschranks und die Sammelschiene des die elektrisch leitende Trägerplatte nicht umfassenden Leiters in einem vorderen Bereich des Schaltschranks angeordnet, so dass zwischen den stromführenden Teilen ein ausreichender Abstand vorhanden ist. Diese Sammelschiene und der mit dieser Sammelschiene elektrisch verbundene Kabelanschluss sind vorzugsweise in einer Ebene angeordnet. Sammelschiene und Kabelanschluss sind vorzugsweise in einem vorderen Bereich des Schaltschranks angeordnet.

Eine weitere bevorzugte Ausführungsform sieht vor, dass der die elektrisch leitende Trägerplatte umfassende Leiter eine Sammelschiene aufweist, die sich von der Ebene, in der die elektrisch leitende Trägerplatte liegt, zu der Ebene erstreckt, in der das Schaltgerät liegt. Das Schaltgerät kann somit vor der Trägerplatte angeordnet werden. Vorzugsweise ist das Schaltgerät an einer sich zwischen dem linken und rechten Seitenteil des Schaltschranks erstreckenden Tragschiene befestigt.

Das Schaltgerät ist in dem Schaltschrank vor der Trägerplatte im Bereich einer der beiden Seitenteile des Schaltschranks angeordnet. Dabei ist das Schaltgerät in dem Schaltschrank vorzugsweise oberhalb des ersten und zweiten Kabelanschlusses angeordnet.

Einer der beiden Kabelanschlüsse ist elektrisch leitend an der elektrisch leitenden Trägerplatte befestigt. Dieser Kabelanschluss bzw. die elektrisch leitende Trägerplatte sind vorzugsweise auf Erdpotential gelegt.

Das Schaltgerät weist einen Schaltschütz mit mehreren Schaltpolen auf, die parallel geschaltet sind und jeweils ein Schaltkontaktpaar aufweisen. Der eine Kontakt des Schaltpols kann ein feststehender Kontakt und der andere Kontakt kann ein beweglicher Kontakt sein. Bei einem mehrpoligen Schaltschütz verbindet der eine elektrische Leiter den einen Kabelanschluss elektrisch mit den feststehenden Schaltkontakten der Schaltpole und der andere elektrische Leiter den anderen Kabelanschluss mit den beweglichen Schaltkontakten der Schaltpole.

Nachfolgend wird ein Ausführungsbeispiel der Erfindung unter Bezugnahme auf die Figuren im Einzelnen erläutert.

Es zeigen:
- Fig. 1: ein Schienenfahrzeug und die Spannungsbegrenzungseinrichtung in stark vereinfachter schematischer Darstellung,
- Fig. 2: die wesentlichen Komponenten der Spannungsbegrenzungseinrichtung in schematischer Darstellung,
- Fig. 3: einen Schaltschrank in einer stark vereinfachten, teilweise geschnittenen perspektiven Darstellung, wobei in dem Schaltschrank nur die Bedien- und
- Fig. 4: Steuereinheit der Spannungsbegrenzungseinrichtung dargestellt ist, eine Frontansicht des Schaltschranks der Spannungsbegrenzungseinrichtung von Fig. 3,
- Fig. 5: eine Seitenansicht des Schaltschranks der Spannungsbegrenzungseinrichtung von Fig. 3 und
- Fig. 6: ein elektrisches Ersatzschaltbild zur Darstellung der Stromverdrängung in der elektrisch leitenden Trägerplatte der Spannungsbegrenzungseinrichtung.

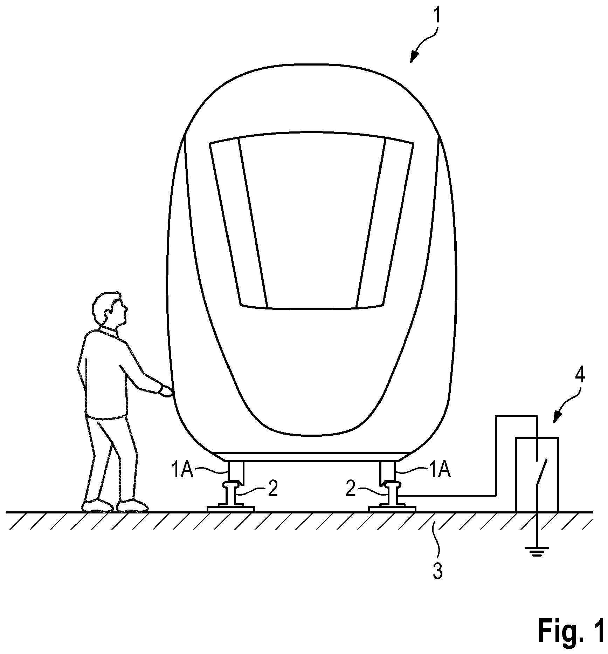

Fig. 1 zeigt ein gleichstrombetriebenes Schienenfahrzeug zusammen mit der erfindungsgemäßen Spannungsbegrenzungseinrichtung. Das Schienenfahrzeug 1 weist Räder 1A auf, die auf einer Fahrschiene 2 laufen. Die Fahrschiene 2 der Bahnanlage ist gegenüber dem Erdreich 3 isoliert. Der elektrische Widerstand der Fahrschiene 2 führt zu dem Auftreten einer Potentialdifferenz zwischen dem Schienenfahrzeug 1 bzw. der Schiene 2 und dem Erdreich 3. Die Spannungsbegrenzungseinrichtung 4 verhindert das Auftreten von unzulässigen Berührungsspannungen während des normalen Bahnbetriebs oder in einem Fehlerfall (Kurzschluss). Die Spannungsbegrenzungseinrichtung 4 ist zwischen der Fahrschiene 2 und der Erdungsanlage eingebaut und kann eine elektrische Verbindung zwischen der Fahrschiene 2 und Erde 3 herstellen (Erdungskurzschließer).

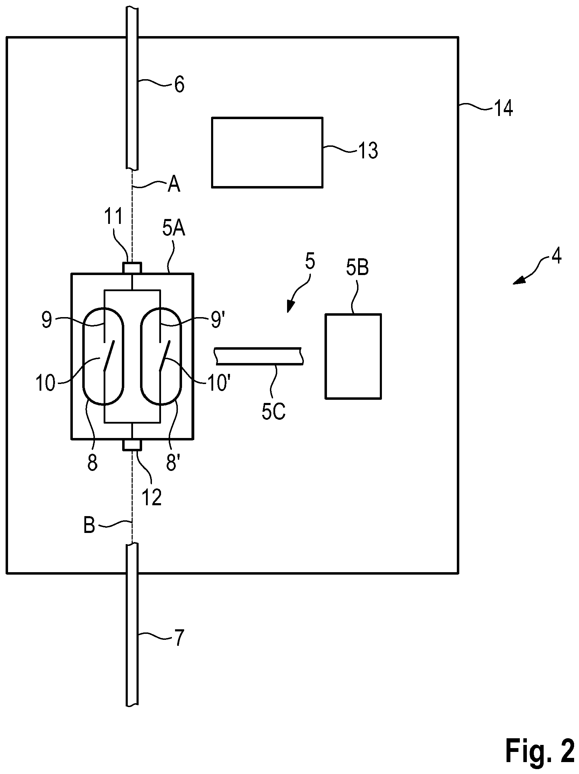

Fig. 2 zeigt der wesentlichen Komponenten der Spannungsbegrenzungseinrichtung 4 in einer stark vereinfachten schematischen Darstellung. Die Spannungsbegrenzungseinrichtung 4 weist ein Schaltgerät 5 auf, um eine elektrische Verbindung zwischen einem oder mehreren Kabeln 7, die zu einem nicht dargestellten Bauteil oder einer Baugruppe der Bahnenergieversorgungsanlage, beispielsweise Fahrschiene 2 , führen und einem oder mehreren Kabeln 6, die mit der nicht dargestellten Erdungsanlage oder anderen, zu schützenden, metallischen Bauteilen verbunden sind, herzustellen.

Das Schaltgerät 5 verfügt über ein einpoliges oder mehrpoliges Schaltschütz 5A, das zum Stand der Technik gehört. Bei dem vorliegenden Ausführungsbeispiel weist das Schaltschütz 5A zwei parallel geschaltete Schaltpole 8, 8' auf, die jeweils eine feststehenden Schaltkontakt 9, 9' und einen beweglichen Schaltkontakt 10, 10' haben. Die feststehenden Schaltkontakte 9, 9' sind elektrisch mit einem Anschluss 11 des Schaltschützes 5 und die beweglichen Schaltkontakte 10, 10' sind elektrisch mit dem anderen Anschluss 12 des Schaltschützes 5A verbunden.

Das Schaltschütz 5A kann auch über weitere Bauteile, beispielsweise sogenannte Funkenkamine verfügen, die zum Stand der Technik gehören. Zur Betätigung der beweglichen Schaltkontakte 10, 10' verfügt das Schaltgerät 5 über eine elektromagnetische Betätigungseinheit 5B, die verschiedene Bauteile, beispielsweise eine Spule und einen Magnetanker aufweisen kann, um eine Welle 5C zu betätigen, mit der die beweglichen Schaltkontakte 10, 10' bewegt werden. Hierbei ist die Anordnung frei wählbar.

Die elektrische Verbindung zwischen dem einen Anschluss 11 des Schaltschützes 5A und dem Kabel 6 erfolgt mittels eines Leiters A und die elektrische Verbindung zwischen dem anderen Anschluss 12 des Schaltschützes 5A und dem Kabel 7 erfolgt mittels eines Leiters B.

Darüber hinaus kann die Spannungsbegrenzungseinrichtung 4 auch über eine Bedien- und/oder Steuereinheit 13 verfügen, die eine gemeinsame Baugruppe bilden können. Diese Komponenten sowie noch weitere nicht dargestellte Komponenten der Spannungsbegrenzungseinrichtung befinden sich in einem Schaltschrank 14, der möglichst kleine Abmessungen haben sollte.

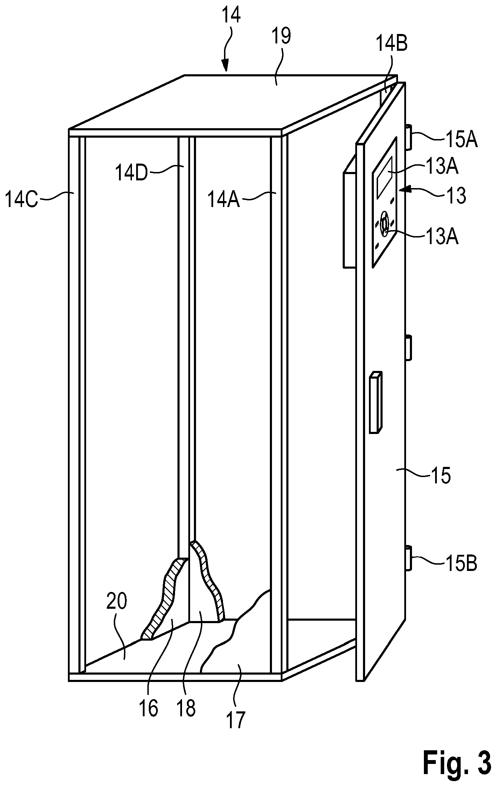

Fig. 3 zeigt eine Ansicht des Schaltschranks 14 in einer vereinfachten perspektivischen Darstellung. Der Schaltschrank 14 weist in der in Fig. 3 dargestellten Lage vier vertikale Profilstäbe 14A, 14B, 14C, 14D auf, an denen ein vorderes Teil 15, ein hinteres Teil 16 sowie ein linkes Seitenteil 17 und ein rechtes Seitenteil 18 und ein Deckelteil 19 und ein Bodenteil 20 befestigt sind. Das vordere Teil 15 ist eine schwenkbare Tür, die an seitlichen Scharnieren 15A, 15B auf der rechten Seite des Schaltschranks 14 befestigt ist.

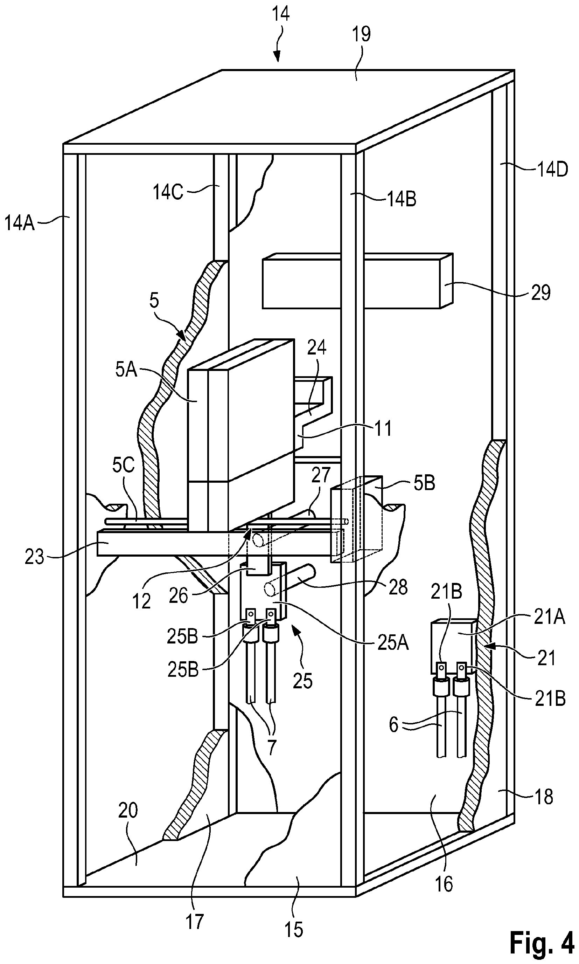

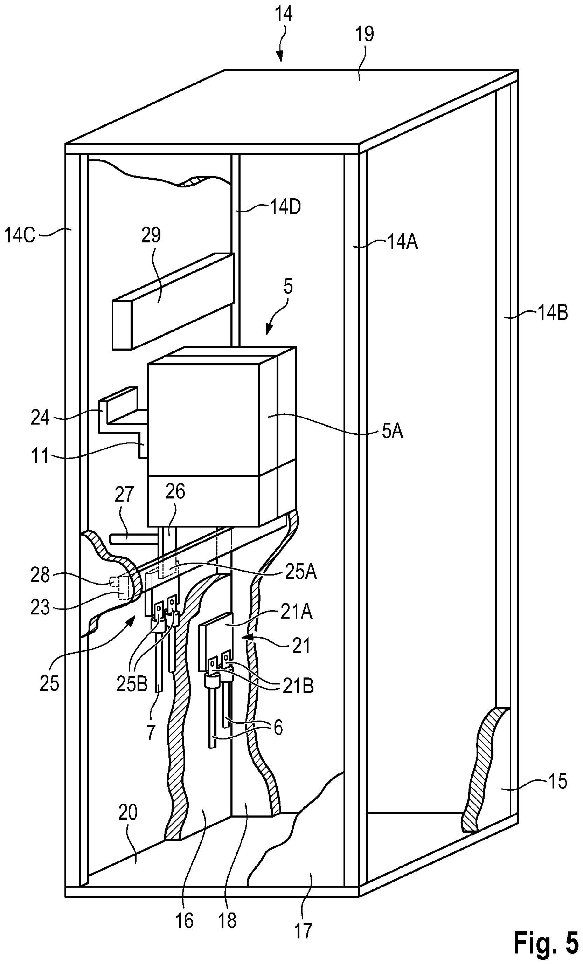

Im Folgenden wird die Anordnung der einzelnen Komponenten der Spannungsbegrenzungseinrichtung 4 in dem Schaltschrank 14 unter Bezugnahme auf die Figuren 3 bis 5 beschrieben. Die Teile von Fig. 2 werden in den Figuren 3 bis 5 mit denselben Bezugszeichen bezeichnet.

Die Bedien- und Steuereinheit 13 der Spannungsbegrenzungseinrichtung 4 ist in den oberen Teil der Tür 15 des Schaltschranks 14 eingesetzt, so dass die Bedienelemente 13A von außen zugänglich sind. Der rückwärtige Teil der Bedien- und Steuereinheit 13 erstreckt sich in die obere Hälfte des Schaltschranks 14.

Der hintere Teil 16 des Schaltschranks 14, d. h. dessen Rückwand, ist eine Metallplatte, vorzugsweise aus Aluminium, die sowohl als eine elektrisch leitende Trägerplatte als auch eine Montageplatte fungiert. An der Trägerplatte 16 ist bei dem vorliegenden Ausführungsbeispiel auf der rechten Seite im unteren Bereich des Schaltschranks elektrisch leitend ein Kabelanschluss 21 befestigt, der eine mit der Trägerplatte 16 elektrisch leitend verbundene Anschlussplatte 21A, vorzugsweise eine Kupferplatte, mit bei dem vorliegenden Ausführungsbeispiel zwei Kabelschuhen 21B aufweist, an denen jeweils ein Anschlusskabel 6 angeschossen ist, das zu einer nicht dargestellten Erdungsanlage führt.

Das Schaltschütz 5A und die Betätigungseinheit 5B des Schaltgeräts 5 der Spannungsbegrenzungseinrichtung 4 sind in der oberen Hälfte des Schaltschranks 14 an einer sich zwischen dem linken und rechten Seitenteil 17, 18 des Schaltschranks 14 erstreckenden Tragschiene 23 (beispielweise Barren genannt) befestigt. Schaltschütz 5A und Betätigungseinheit 5B liegen in einem ausreichenden Abstand zu der elektrisch leitenden Trägerplatte 16, die bei dem vorliegenden Ausführungsbeispiel die Rückwand des Schaltschranks ist, und in einer zu der Trägerplatte parallel verlaufenden Ebene. Zwischen Schaltschütz 5A und Betätigungseinheit 5B erstreckt sich in dieser Ebene die horizontale Betätigungswelle 5C.

Der eine Anschluss 11 des Schaltschützes 5A ist elektrisch mit der Trägerplatte 16 verbunden. Die elektrische Verbindung mit der Trägerplatte 16 erfolgt mittels einer Sammelschiene 24, beispielsweise eine Z-förmig, L-förmig oder U-förmig gebogene Kupferschiene mit einem ausreichenden Querschnitt, die sich von der Trägerplatte 16 zu dem einen Anschluss 11 des Schaltschützes 5A in der vorderen Ebene des Schaltschranks 14 erstreckt. Der andere Anschluss 12 des Schaltschützes 5A ist elektrisch mit dem anderen Kabelanschluss 25 verbunden, der eine Anschlussplatte 25A, vorzugsweise eine Kupferplatte, mit bei dem vorliegenden Ausführungsbeispiel zwei Kabelschuhen 25B aufweist, um zwei Anschlusskabel 7 anschließen zu können. Die elektrische Verbindung mit diesem Kabelanschluss 25 erfolgt mittels einer Sammelschiene 26, vorzugsweise einer flachen Kupferschiene mit einem ausreichenden Querschnitt. Diese Sammelschiene 26 und dieser Kabelanschluss 25 sind in der vorderen Ebene im ausreichenden Abstand zu der Trägerplatte 16 angeordnet. Die Sammelschiene 26 ist mit einem Isolator 27 und die Anschlussplatte 25B des Kabelanschlusses 25 ist mit einem Isolator 28 an der Trägerplatte befestigt.

In dem Schalttschrank können noch weitere Komponenten der Spannungsbegrenzungseinrichtung vorgesehen sein, die aber für die Erfindung nicht wesentlich sind. Eine dieser Komponenten ist in den Figuren mit dem Bezugszeichen 29 bezeichnet.

Bei dem vorliegenden Ausführungsbeispiel sind der Schaltschütz 5A auf der linken Seite und die Betätigungseinheit 5B auf der rechten Seite des Schaltschranks 14 angeordnet. Der Schaltschütz mit den betreffenden Anschlusskomponenten kann aber auch auf der rechten Seite und die Betätigungseinheit auf der linken Seite des Schaltschranks angeordnet sein.

Die elektrisch leitende Trägerplatte 16 dient als Leiter A für den Stromfluss von dem einem Kabelanschluss 21 zu dem einen Anschluss 11 des Schaltgeräts 5A. Von dem anderen Anschluss 12 des Schaltgeräts 5A fließt der Strom über die Sammelschiene 26 zu dem anderen Kabelanschluss 25. Die Trägerplatte 16 dient aber nicht nur als elektrischer Leiter, sondern kann auch als Montageplatte für die Sammelschiene 26 des die Trägerplatte nicht umfassenden Leiters B und die Anschlussplatte 25A des anderen Kabelanschlusses 25 verwendet werden. Dadurch wird die Montage vereinfacht und ein kompakter Aufbau erzielt. Zusätzlich können auch weitere, sekundäre Bauteile, beispielwiese Klemmen oder Relais, auf der Trägerplatte montiert werden.

Ein entscheidender Vorteil der elektrisch leitenden Trägerplatte 16 liegt darin, dass aufgrund der Stromverdrängung in der Trägerplatte 16 die Schaltkontakte 9, 9' und 10, 10' des Schaltschützes 5A entlastet werden.

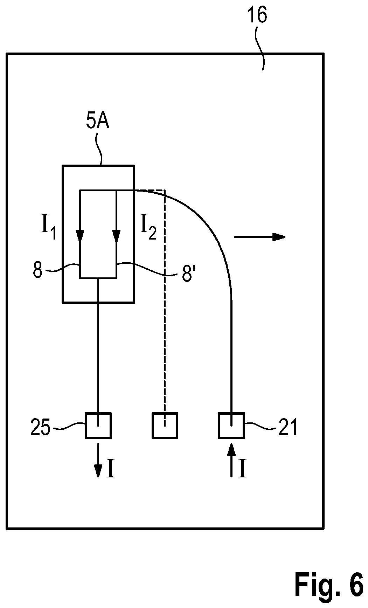

Fig. 6 zeigt den Stromfluss durch den zweipoligen Schaltschütz 5A und die Trägerplatte 16. Der Stromfluss in dieser Schrift wird anhand einer Stromflussrichtung erläutert. In der Praxis sind bi-direktionale (in beiden Richtungen) Stromflüsse möglich, wobei das dargestellte Prinzip entsprechend anzuwenden ist. Bei dem vorliegenden Ausführungsbeispiel wird angenommen, dass der Strom I von dem einen Kabelanschluss 21 durch die Trägerplatte 16 zu dem einen Anschluss 11 des Schaltschützes 5A, durch die beiden parallel geschalteten Schaltpole 8, 8' des Schaltschützes 5A zu dem anderen Anschluss 12 des Schaltschützes und durch die Sammelschiene 26 zu dem anderen Kabelanschluss 25 fließt. Bei der oben beschriebenen räumlichen Anordnung der einzelnen Komponenten fließen die Ströme I₁ und I₂ in den leitenden Teilen der beiden Schaltpole 8, 8' in die gleiche Richtung. Der Strom I in der Trägerplatte 16 und die Ströme I₁ und I₂ in den beiden Schaltpolen fließen in entgegengesetzter Richtung.

Die erfindungsgemäße Spannungsbegrenzungseinrichtung unterscheidet sich von den bekannten Spannungsbegrenzungseinrichtungen insbesondere dadurch, dass der Strom zu dem einen Anschluss des Schaltgeräts nicht durch einen schmalen elektrischen Leiter (Sammelschiene) fließt, der sich in enger räumlicher Nähe zu dem Schaltgerät erstreckt, sondern durch die Trägerplatte fließt.

Aufgrund des Stromflusses durch einen schmalen elektrischen Leiter (Sammelschiene) bei einer Spannungsbegrenzungseinrichtung nach dem Stand der Technik, der in Fig. 6 durch eine gestrichelte Linie gekennzeichnet ist, wirken auf die elektrisch leitenden Teile der Schaltpole 8, 8' des Schaltschützes 5A, insbesondere auf deren Schaltkontakte 10, 10', elektromagnetische Kräfte, die dazu führen, dass der durch das Schaltschütz des Schaltgerätes fließende Strom I in Richtung des in Fig. 6 außenliegenden, linken Schaltpols 8 verdrängt wird, wobei angenommen wird, dass eine Stromverdrängung in dem schmalen elektrischen Leiter (Sammelschiene) als ein "feststehender elektrischer Leiter" nicht auftritt. Folglich ist der Strom I₁ größer als der Strom I₂. Infolge des höheren Stromflusses wirken auf die Schaltkontakte des linken Schaltpols 8 größere Kräfte, die dazu führen, dass die zum Schließen dieses Schalters erforderlichen Kräfte größer werden. Folglich muss dieser Schalter stärker dimensioniert werden, beispielsweise dessen Federpakete müssen stärker ausgelegt werden, um ein ordnungsgemäßes Schließen des Schalters gewährleisten zu können. Ansonsten besteht wegen der hohen Ströme die Gefahr, dass der Schalter beim Schließen oder Führen des Stromes abbrennt.

Demgegenüber ist bei der erfindungsgemäßen Spannungsbegrenzungseinrichtung anstelle des schmalen elektrischen Leiters (Sammelschiene) die elektrisch leitende Trägerplatte vorgesehen. Bei der erfindungsgemäßen Spannungsbegrenzungseinrichtung tritt eine Stromverdrängung in der Trägerplatte 16 auf. In Fig. 6 ist der Stromfluss durch die Trägerplatte in einer durchgezogenen Linie gekennzeichnet. Die Stromverdrängung findet in die dem Schaltschütz 5A entgegengesetzte Richtung statt, die in Fig. 6 durch einen Pfeil gekennzeichnet ist. Es hat sich gezeigt, dass aufgrund der Stromverdrängung in der Trägerplatte 16 die Stromstärke I₁ des durch den außenliegenden, linken Schaltpol 8 fließenden Stroms weitgehend der Stromstärke I₂ des durch den innenliegenden, rechten Schaltpol 8' fließenden Stroms entspricht. Aufgrund der Stromverdrängung in der Trägerplatte 16 wirken auf die Schaltkontakte 10, 10' des Schaltschützes 5A geringere elektromagnetische Kräfte, so dass dessen Schaltkontakte entlastet werden. Daher können die Schaltkontakte schwächer dimensioniert werden.

## Patentansprüche

1. Schaltschrank, der eine vorderes Teil (15) und ein hinteres Teil (16), ein linkes Seitenteil (17) und rechtes Seitenteil (18) und ein Deckelteil (19) und ein Bodenteil (20) aufweist, wobei in dem Schaltschrank eine Spannungsbegrenzungseinrichtung angeordnet ist, die ein elektromagnetisch betätigbares Schaltgerät (5) aufweist, mit dem eine elektrische Verbindung zwischen einem ersten Kabelanschluss (21) und einem zweiten Kabelanschluss (25) herstellbar ist, wobei ein elektrischer Leiter (A) den ersten Kabelanschluss (21) mit dem Schaltgerät (5) und ein anderer elektrischer Leiter (B) den zweiten Kabelanschluss (25) mit dem Schaltgerät (5) elektrisch verbindet, wobei das Schaltgerät (5) über ein mehrpoliges Schaltschütz (5A) verfügt,
**dadurch gekennzeichnet, dass**
einer der beiden elektrischen Leiter (A) eine elektrisch leitende Trägerplatte (16) umfasst, die an der Rückseite des Schaltschranks (14) angeordnet ist,
dass die elektrisch leitende Trägerplatte (16) zumindest einen Teil der Rückwand (16) oder zumindest einen Teil einer rückwärtigen Wand des Schaltschranks (14) bildet,
dass das Schaltgerät (5) in einer zu der elektrisch leitenden Trägerplatte (16) parallel verlaufenden Ebene angeordnet ist,
wobei das Schaltschütz (5A) des Schaltgeräts in dem Schaltschrank vor der Trägerplatte (16) im Bereich einer der beiden Seitenteile (17, 18) des Schaltschranks (14) angeordnet ist.

2. Schaltschrank nach Anspruch 1, **dadurch gekennzeichnet, dass** zumindest Teile (25A, 26) des anderen elektrischen Leiters (B) mittels mindestens eines Isolators (27, 28) an der elektrisch leitenden Trägerplatte (16) befestigt sind.

3. Schaltschrank nach Anspruch 1 oder 2, **dadurch gekennzeichnet, dass** die elektrisch leitende Trägerplatte (16) aus Aluminium besteht.

4. Schaltschrank nach einem der Ansprüche 1 bis 3, **dadurch gekennzeichnet, dass** der die elektrisch leitende Trägerplatte (16) nicht umfassende Leiter (B) eine Sammelschiene (26) aufweist, die mit einem der beiden Kabelanschlüsse (25) elektrisch verbunden ist.

5. Schaltschrank nach Anspruch 4, **dadurch gekennzeichnet, dass** die Sammelschiene (26) des die elektrisch leitende Trägerplatte (16) nicht umfassenden Leiters (B) und die elektrisch leitende Trägerplatte (16) in dem Schaltschrank (14) in unterschiedlichen Ebenen angeordnet sind.

6. Schaltschrank nach Anspruch 4 oder 5, **dadurch gekennzeichnet, dass** die Sammelschiene (26) des die elektrisch leitende Trägerplatte (16) nicht umfassenden Leiters (B) und der mit der Sammelschiene (26) elektrisch verbundene Kabelanschluss (25) in einer Ebene angeordnet sind.

7. Schaltschrank nach einem der Ansprüche 1 bis 6, **dadurch gekennzeichnet, dass** der die elektrisch leitende Trägerplatte (16) umfassende Leiter (A) eine Sammelschiene (24) aufweist, die sich von der Ebene, in der die elektrisch leitenden Trägerplatte (16) liegt, zu der Ebene erstreckt, in der das Schaltgerät (5A) angeordnet ist.

8. Schaltschrank nach einem der Ansprüche 1 bis 7, **dadurch gekennzeichnet, dass** das Schaltgerät (5A) in dem Schaltschrank (14) oberhalb des ersten und zweiten Kabelanschlusses (21, 25) angeordnet sind.

9. Schaltschrank nach einem der Ansprüche 1 bis 8, **dadurch gekennzeichnet, dass** das Schaltgerät (5A) an einer sich zwischen dem linken und rechten Seitenteil (17, 18) des Schaltschranks (14) erstreckenden Tragschiene (23) befestigt ist.

10. Schaltschrank nach einem der Ansprüche 1 bis 9, **dadurch gekennzeichnet, dass** der erste oder zweite Kabelanschluss (21, 25) an der elektrisch leitenden Trägerplatte (16) elektrisch leitend befestigt ist.

11. Schaltschrank nach einem der Ansprüche 1 bis 10, **dadurch gekennzeichnet, dass** die elektrisch leitende Trägerplatte (16) und der an der Trägerplatte (16) elektrisch leitend befestigte Kabelanschluss (21) auf Erdpotential gelegt sind.

12. Schaltschrank nach einem der Ansprüche 1 bis 11, **dadurch gekennzeichnet, dass** das Schaltschütz (5A) des Schaltgeräts (5) mehrere parallele geschaltete Schaltpole (8, 8') aufweist, die jeweils zwei Schaltkontakte (9, 9'; 10, 10') aufweisen.

## Claims

1. A switch cabinet comprising a front part (15) and a rear part (16), a left side part (17) and a right side part (18) and a top part (19) and a bottom part (20), wherein a voltage limiting device is disposed in the switch cabinet, the voltage limiting device having an electromagnetically operable switching device (5) for producing an electrical connection between a first cable terminal (21) and a second cable terminal (25), wherein an electrical conductor (A) electrically connects the first cable terminal (21) to the switching device (5) and another electrical conductor (B) electrically connects the second cable terminal (25) to the switching device (5), wherein the switching device (5) comprises a multi-pole contactor (5A), **characterised in that**
one of the two electrical conductors (A) comprises an electrically conductive support plate (16) which is disposed at the back of the switch cabinet (14),
the electrically conductive support plate (16) forms at least part of the rear wall (16) or at least part of a back wall of the switch cabinet,
the switching device (5) is disposed in a plane extending parallel to the electrically conductive support plate (16),
wherein the contactor (5A) of the switching device is disposed in the switch cabinet in front of the support plate (16) in the area of one of the two side parts (17, 18) of the switch cabinet (14).

2. The switch cabinet according to claim 1, **characterised in that** at least parts (25A, 26) of the other electrical conductor (B) are fastened to the electrically conductive support plate (16) by means of at least one insulator (27, 28).

3. The switch cabinet according to claim 1 or 2, **characterised in that** the electrically conductive support plate (16) is made of aluminium.

4. The switch cabinet according to any of claims 1 to 3, **characterised in that** the conductor (B), which does not comprise the electrically conductive support plate (16), comprises a bus bar (26) which is electrically connected to one of the two cable terminals (25).

5. The switch cabinet according to claim 4, **characterised in that** the busbar (26) of conductor (B), which does not comprise the electrically conductive support plate (16), and the electrically conductive support plate (16) are disposed in different planes in the cabinet (14).

6. The switch cabinet according to claim 4, **characterised in that** the busbar (26) of conductor (B), which does not comprise the electrically conductive support plate (16), and the cable terminal (25) electrically connected to the busbar (26) are disposed in one plane.

7. The switch cabinet according to any of claims 1 to 6, **characterised in that** the conductor (A) comprising the electrically conductive support plate (16) has a busbar (24) extending from the plane in which the electrically conductive support plate (16) lies to the plane in which the switching device (5A) is disposed.

8. The switch cabinet according to any of claims 1 to 7, **characterised in that** the switching device (5A) is disposed in the cabinet (14) above the first and second cable terminal (21, 25).

9. The method according to any of claims 1 to 8, **characterised in that** the switching device (5A) is fastened to a mounting rail (23) extending between the left and right-side part (17, 18) of the switch cabinet (14).

10. The switch cabinet according to any of claims 1 to 9, **characterised in that** the first or second cable terminal (21, 25) is electrically conductively attached to the electrically conductive support plate (16).

11. The switch cabinet according to any of claims 1 to 10, **characterised in that** the electrically conductive support plate (16) and the cable terminal (21) which is electrically conductively attached to the support plate (16) are connected to ground potential.

12. The switch cabinet according to any of claims 1 to 11, **characterised in that** the contactor (5A) of the switching device (5) has a plurality of parallel switching poles (8, 8'), each having two switching contacts (9, 9', 10, 10').

## Revendications

1. Armoire électrique, qui présente une partie avant (15) et une partie arrière (16), une partie latérale gauche (17) et une partie latérale droite (18) et une partie formant couvercle (19) et une partie de fond (20), dans laquelle est disposée dans l'armoire électrique un dispositif de limitation de tension qui présente un appareil de commutation (5) pouvant être actionné de manière électromagnétique, avec lequel un raccordement électrique entre un premier connecteur de câble (21) et un deuxième connecteur de câble (25) peut être établi, dans laquelle un conducteur électrique (A) raccorde électriquement le premier connecteur de câble (21) à l'appareil de commutation (5) et un autre conducteur électrique (B) raccorde électriquement le deuxième connecteur de câble (25) à l'appareil de commutation (5), dans laquelle l'appareil de commutation (5) dispose d'un contacteur (5A) multipolaire,
**caractérisée en ce que**
un des deux conducteurs électriques (A) comprend une plaque de support (16) électriquement conductrice, qui est disposée sur le côté arrière de l'armoire électrique (14),
que la plaque de support (16) électriquement conductrice forme au moins une partie de la paroi arrière (16) ou au moins une partie d'une paroi arrière de l'armoire électrique (14),
que l'appareil de commutation (5) est disposé dans un plan s'étendant de manière parallèle par rapport à la plaque de support (16) électriquement conductrice,
que le contacteur (5A) de l'appareil de commutation est disposé dans l'armoire électrique devant la plaque de support (16) dans la zone d'une des deux parties latérales (17, 18) de l'armoire électrique (14).

2. Armoire électrique selon la revendication 1, **caractérisée en ce qu'**au moins des parties (25A, 26) de l'autre conducteur électrique (B) sont fixées sur la plaque de support (16) électriquement conductrice au moyen d'au moins un isolateur (27, 28).

3. Armoire électrique selon la revendication 1 ou 2, **caractérisée en ce que** la plaque de support (16) électriquement conductrice est constituée d'aluminium.

4. Armoire électrique selon l'une quelconque des revendications 1 à 3, **caractérisée en ce que** le conducteur (B) ne comprenant pas la plaque de support (16) électriquement conductrice présente une barre omnibus (26) qui est raccordée électriquement à un des deux connecteurs de câble (25).

5. Armoire électrique selon la revendication 4, **caractérisée en ce que** la barre omnibus (26) du conducteur (B) ne comprenant pas la plaque de support (16) électriquement conductrice et la plaque de support (16) électriquement conductrice sont disposées dans différents plans dans l'armoire électrique (14).

6. Armoire électrique selon la revendication 4 ou 5, **caractérisée en ce que** la barre omnibus (26) du conducteur (B) ne comprenant pas la plaque de support (16) électriquement conductrice et le connecteur de câble (25) raccordé électriquement à la barre omnibus (26) sont disposés dans un plan.

7. Armoire électrique selon l'une quelconque des revendications 1 à 6, **caractérisée en ce que** le conducteur (A) comprenant la plaque de support (16) électriquement conductrice présente une barre omnibus (24) qui s'étend depuis le plan, auquel la plaque de support (16) électriquement conductrice se situe, vers le plan, auquel l'appareil de commutation (5A) est disposé.

8. Armoire électrique selon l'une quelconque des revendications 1 à 7, **caractérisée en ce que** l'appareil de commutation (5A) est disposé dans l'armoire électrique (14) au-dessus du premier et du deuxième connecteur de câble (21, 25).

9. Armoire électrique selon l'une quelconque des revendications 1 à 8, **caractérisée en ce que** l'appareil de commutation (5A) est fixé sur un rail porteur (23) s'étendant entre la partie latérale gauche et la partie latérale droite (17, 18) de l'armoire électrique (14).

10. Armoire électrique selon l'une quelconque des revendications 1 à 9, **caractérisée en ce que** le premier ou le deuxième connecteur de câble (21, 25) est fixé de manière électriquement conductrice sur la plaque de support (16) électriquement conductrice.

11. Armoire électrique selon l'une quelconque des revendications 1 à 10, **caractérisée en ce que** la plaque de support (16) électriquement conductrice et le connecteur de câble (21) fixé de manière électriquement conductrice sur la plaque de support (16) sont reliées au potentiel de la terre.

12. Armoire électrique selon l'une quelconque des revendications 1 à 11, **caractérisée en ce que** le contacteur (5A) de l'appareil de commutation (5) présente plusieurs pôles de commutation (8, 8') branchés parallèles, qui présentent respectivement deux contacts de commutation (9, 9' ; 10, 10').
